Europäisches Patentamt

European Patent Office

Office européen des brevets

(11) Publication number: **0 262 285 B1**

# EUROPEAN PATENT SPECIFICATION

(45) Date of publication of patent specification: 21.08.91    (51) Int. Cl.⁵: **A01D 34/86, A01D 34/80**

(21) Application number: **87102671.2**

(22) Date of filing: **25.02.87**

(54) Mower with tandem pumps.

(30) Priority: **02.10.86 US 914712**

(43) Date of publication of application:
**06.04.88 Bulletin 88/14**

(45) Publication of the grant of the patent:
**21.08.91 Bulletin 91/34**

(84) Designated Contracting States:
**AT BE CH DE ES FR GB IT LI NL SE**

(56) References cited:
**WO-A-84/02957**
**AT-B- 260 596**
**AT-B- 330 491**
**GB-A- 1 176 847**
**US-A- 2 504 259**

(73) Proprietor: **Torras, Robert M.**
**101 Gould Street**
**St. Simons Island Georgia 31522(US)**

(72) Inventor: **Torras, Robert M.**
**101 Gould Street**
**St. Simons Island Georgia 31522(US)**

(74) Representative: **Rehberg, Elmar, Dipl.-Ing.**
**Postfach 3162 Am Kirschberge 22**
**W-3400 Göttingen(DE)**

## Description

### BACKGROUND OF THE INVENTION

The invention disclosed herein relates to mowers of the type adapted for cutting grass and other vegetation on sloped surfaces, with the mower having a forwardly positioned cutter unit and a rearwardly positioned power unit with rear driving wheels powered by fluid driven motors driven by reversible variable speed pumps.

More particularly, the invention relates to the mounting arrangement of the pumps which drive the wheel motors, with the pumps being mounted on the power unit in front of the driving engine of the power unit, with the pumps projecting forwardly from the power unit toward the space over the cutter unit so that the weight of the pumps is positioned forwardly of the power unit and tends to locate the center of gravity of the mower further forward and tends to reduce the likelihood of tipping the mower over when operating on a steeply sloped surface.

The invention further includes an impact resistant pivot connection between the power unit and the cutter unit, whereby the units are capable of pivoting with respect to each other about a longitudinal axis.

### DESCRIPTION OF THE PRIOR ART

One of the mower designs that has been particularly successful in mowing sloped surfaces is the rear drive slope mower which includes a rearwardly positioned power unit and a forwardly positioned cutter unit. One such slope mower is the Kut Kwick Slope Master SM 23-60 illustrated in Kut Kwick pamphlet SM-0186 and includes a power unit having a chassis which is supported by driving wheels, and the chassis supports the engine and the operator's seat, whereas the cutter unit includes a cutter housing which is supported by caster wheels and the cutter housing supports the cutting blades. The engine mounted on the power unit drives the rear wheels by driving reversible, variable volume pumps, with a pump controlling the movement of a hydraulic motor which drives each rear wheel. The engine also drives the blades of the cutter unit. The direction of movement of the mower is controlled by the relative speed of the two rear drive wheels of the mower. This provides positive control of the mower when operating on sloped terrain.

The rear drive Kut Kwick slope mowers described above also include a pivot mount between the cutter unit and the power unit, whereby these units can pivot with respect to each other about a longitudinal axis. This permits the cutter unit and the power unit to each independently follow the level of the terrain over which they move, so that all wheels of the mower engage the ground simultaneously, thereby providing more accurate cutting of the vegetation and providing additional stability and safety to the operator.

The pivot connection between the rear drive power unit and the front cutter unit is formed of a telescopic bar and sleeve assembly, with the bar mounted to one unit and the sleeve mounted to the other unit, with the sleeve surrounding and rotatable about the bar. The bar and sleeve connector assembly is mounted with its longitudinal axis extending parallel to the centerline of the mower, which allows the cutter unit to tilt about the axis with respect to the power unit.

The rear power unit mowers are particularly adapted for cutting sloped terrain, especially the sloped shoulders of highways. Usually, the operator of the slope mower attempts to cut along a horizontal path, with the mower "crabbing" at an upwardly sloped attitude but travelling along a horizontal path, so as to allow for the tendency of the mower to drift in a downhill direction. Operating the mower in this attitude and in the many other inclined attitudes typically assumed by such a mower during turning and other maneuvers on a sloped surface creates the hazard of overturning the mower.

Even though this type of slope mower has a relatively light front cutting unit and a heavier rear power unit which makes it highly maneuverable unit for slope mowing, it is still important that the components of the mower be sized and located so that the mower is not very long and can turn in a short turning radius and so as to create a center of gravity that is as low as possible and positioned centrally between the sides of the mower and forwardly of the rear driving wheels. Also, it is important that the pivot connection between the rear power unit and the front cutter unit be durable and resistant to deterioration caused by impact of the mower against obstructions such as trees, posts, roots, rocks, holes, etc.

### SUMMARY OF THE INVENTION

Briefly described, the present invention comprises a slope mower of the type that includes a rear power unit and a front cutter unit, with the engine mounted to the power unit and with hydraulic motors arranged to drive the rear wheels of the power unit. Pumps are supported by the power unit and positioned in front of the engine and suspended over the front cutter unit. The pumps are utilized to drive the wheels of the power unit, and optionally are used to drive the cutter blades of the cutter unit. The engine and pumps are arranged in tandem relationship, with the pumps aligned along the length of the mower, at equal distances from the side portions of the mower. The relatively low, aligned positions of the pumps and the engine create a low center of gravity of the mower that is positioned well forward of the rear driving wheels of the power unit, and is positioned centrally from side to side of the mower, which tends to locate the center of gravity of the mower at a position which enhances the stability of the mower during operation, particularly when in an inclined attitude, and when turning on a sloped surface. The extension of the pumps from the power unit over the cutter unit allows the pumps to utilize the space over a cutter deck which tilts or floats with respect to the power unit.

The preferred embodiment of the invention includes an impact resistant pivot mounting between the power unit and the cutter unit, such that the cutter unit pivots about a longitudinal axis with respect to the power unit. The pivot mounting limits the pivotal movement between the power unit and the cutter unit, and the pumps which are supported by the power unit are positioned over the longitudinal pivot axis of the mower, with the pumps being located outside the arc of movement of the cutter unit with respect to the power unit. Therefore, the pumps are supported in an otherwise substantially unuseable space over the pivotable cutter unit, yet the pumps are positioned forward of the engine so as to locate the center of gravity further forward of the rear driving wheels of the mower.

Thus, it is an object of this invention to provide a mower which is well balanced and has less tendency to overturn when moving along a slope or when turning on a sloped surface.

Another object of this invention is to provide a slope mower with a front cutter unit and a rear power unit and independently controlled rear drive wheels for guiding the mower, which utilizes pumps driven by the engine for propelling the rear drive wheels and the cutter blades of the mower, which is inexpensive to produce and to maintain, and which has a center of gravity more suitable for maintaining the mower in an upright attitude when operating on steeply sloped surfaces, and which includes an impact resistant pivot assembly mounted between the rear power unit and the front cutter unit.

Another object of this invention is to provide a slope mower that has a front cutter unit and a rear power unit with an internal combustion engine that drives pumps arranged in tandem relationship with respect to the engine so as to extend in a forward direction partially over the cutter unit so as to locate the center of gravity of the entire mower in a forward position.

Other objects, features and advantages of this invention will become apparent upon reading the following specification, when taken in conjunction with the accompanying drawings.

## BRIEF DESCRIPTION OF THE DRAWINGS

Fig. 1 is a perspective illustration of the slope mower with tandem pumps, showing the rear power unit and the forward cutter unit and the tandem pumps mounted forwardly of the engine and supported by the rear power unit.

Fig. 2 is an exploded view of the slope mower, showing the manner in which the tandem pumps are to be mounted to the power unit.

Fig. 3 is a side view of the slope mower, showing how the pumps that are driven by the engine of the power unit are suspended partially over the forwardly positioned cutter unit.

Fig. 4 is a front view of the mower with some elements of the mower removed, showing the arc of movement of the cutter unit with respect to the power unit.

Fig. 5 is an exploded perspective view of the pivotal connection between the power unit and the cutter unit of the mower.

Fig. 6 is a cross sectional view of the pivotal connection between the power unit and the cutter unit.

Fig. 7 is an end elevational view of the pivotal connection, taken along lines 7-7 of Fig. 6, showing the portions of the pivotal connection that are mounted to the cutter unit in dashed lines so as to illustrate the portions of the power unit that are located behind the portions of the cutter unit.

## DETAILED DESCRIPTION

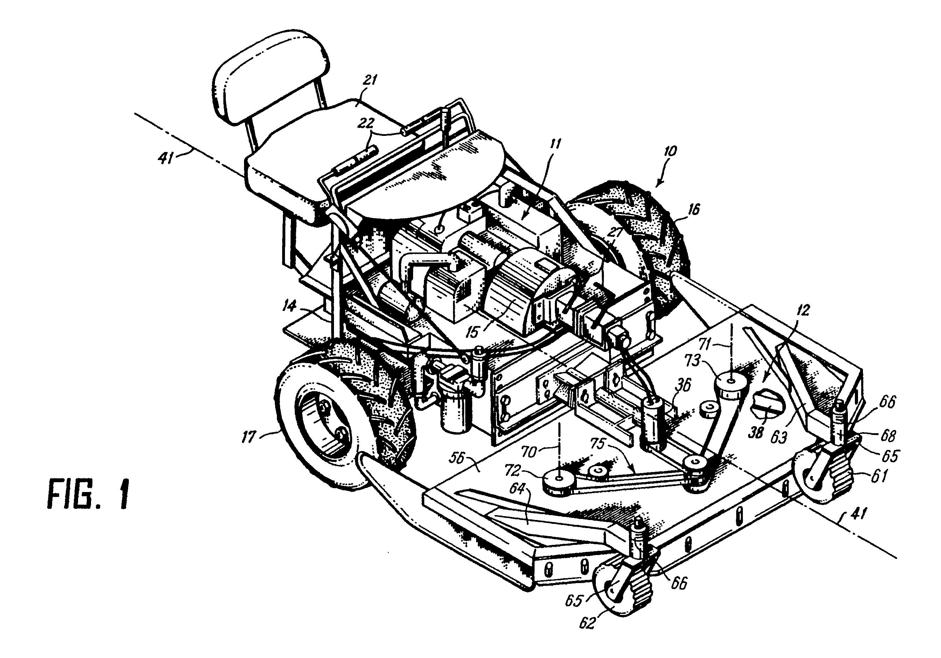

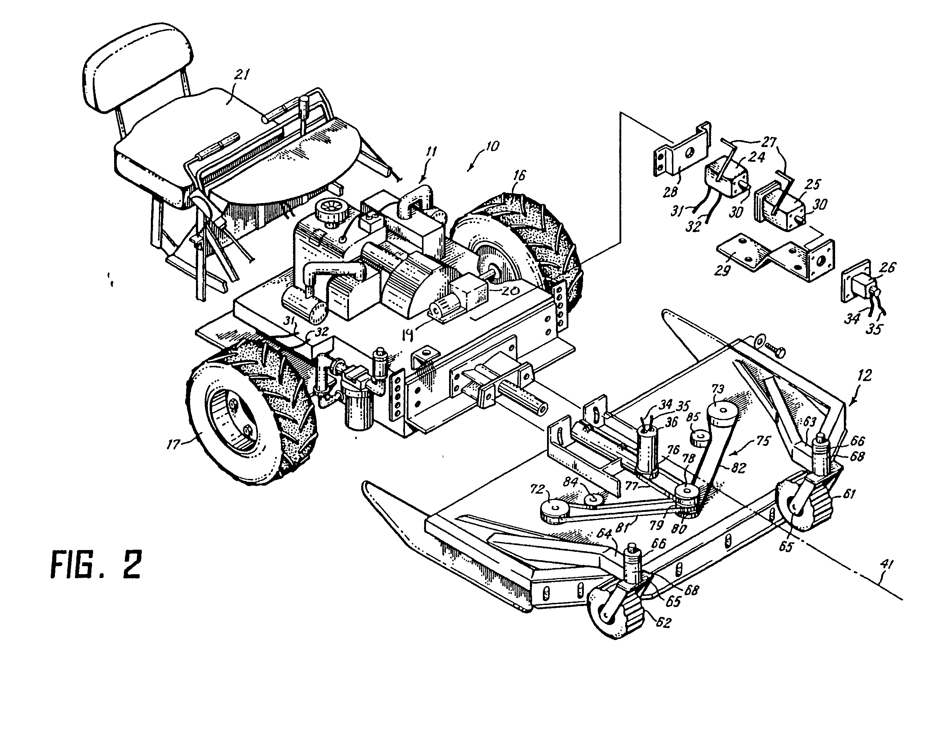

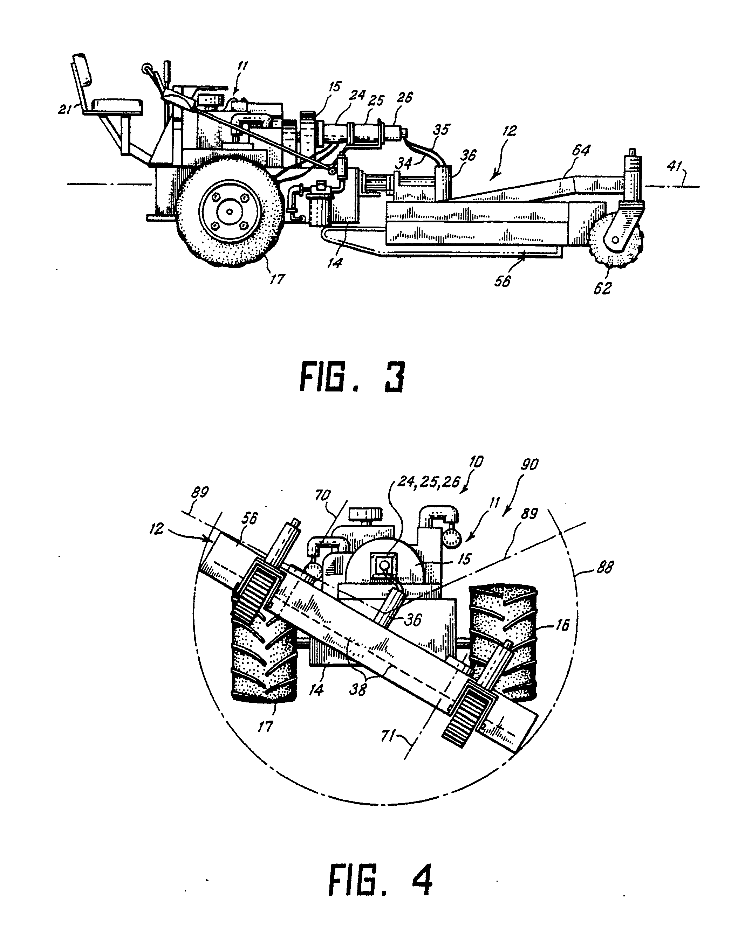

Referring now in more detail to the drawings, in which like numerals indicate like parts throughout the several views, Fig. 1 illustrates the slope mower 10 which includes a power unit 11 and a cutter unit 12. The power unit is positioned rearwardly of the cutter unit 12 and includes a chassis 14 on which the various components of the power unit are mounted. For example, internal combustion engine 15 is located along the centerline of the chassis, and the rear driving wheels 16 and 17 of the mower are rotatably mounted at opposite sides of the chassis. As shown in Fig. 2, hydraulic motors 19 (only one shown) are arranged to drive each rear driving wheel, and the motors 19 operate through a conventional gear box 20 which drives the axle of each wheel. The driver's seat 21 is mounted rearwardly of engine 15 on chassis 14.

A series of pumps, such as pumps 24, 25 and 26, are mounted in any order in an aligned or tandem relationship in front of engine 15. The pumps are supported by various brackets 29 from chassis 14 so that they project directly out in front of engine 15. The pumps are supported from chassis 14 and/or the engine 15, even though they project out in front of the chassis over the cutter deck.

Pumps 24 and 25 are connected to the wheel motors 19, and pumps 24 and 25 are variable displacement piston pumps with a tilt plate control whereby the flow of hydraulic fluid into and out of the pump is variable and reversible by simply tilting the control plate. Each pump includes a lever or other control linkage that controls the angle of the tilt plate of the pump, and each lever is connected to a control linkage 27 that extends to the driver's seat 21. Further, the pumps 24 and 25 are known as tandem pumps in that the drive shaft 30 of each pump extends from both ends of the pump housing and is connectable to the drive shafts of other aligned pumps. Motors 19 are reversible, fixed displacement motors and the direction of operation of the motors is dependent upon the direction of the flow of hydraulic fluid to and from the motors. With this arrangement, the operator, by operating the control linkages 27 connected to the tiltable plate of each pump can independently control the speed and direction of rotation of each driving wheel 16 or 17 independently of the other driving wheel, so that the driving wheels not only move the mower in forward and rearward directions, but also can function to turn the mower.

Pumps 24 and 25 are closed loop pumps, in that their conduits, such as conduits 31 and 32 of pump 24 are connected directly to its respective hydraulic motor 19.

Pump 26 is a positive displacement gear pump and its conduits 34 and 35 are connected to hydraulic cutter motor 36 of the cutter unit. Pump 26 is nonreversible so that the cutter blades 38 always operate in the proper direction of rotation. Pump 26 and its motor 36 are in an open loop or a closed arrangement. When connected in an open loop arrangement the outlet from motor 36 communicates with a reservoir (not shown) in the lower portion of chassis 14, whereby the reservoir feeds the inlet of the pump 26 and pump 26 has an additional outlet conduit (not shown) which communicates with the fluid loops of pumps 24 and 25 so that pump 26 functions as a charge pump to replace any fluid lost from pumps 24 and 25. Cutter motor 36 is located at the longitudinal axis 41 so that its weight is applied along the centerline of the mower and tends to stabilize the mower and so that the connecting hoses from the pump to the motor are as short as possible and still able to accommodate the relative movements between chassis and cutter deck.

In the embodiment disclosed herein, the cutter unit 12 and power unit 11 are connected together by impact resistant pivot mount 40, which is described in more detail hereinafter.

Caster wheels 61 and 62 support cutter housing 56. Support arms 63 and 64 are rigidly mounted at one end to the top surface of cutter housing 56 and the support arms extend forwardly of the cutter housing. The wheels 61 and 62 are rotatably supported by wheel clevises 65 which are pivotably attached at their upper ends to support arms 63 and 64. Shims 66 can be mounted above or below the caster socket 68 so as to adjust the height at which the caster wheels 61 and 62 support cutter housing 56.

Pivot mount 40 rigidly connects together the power unit 11 and cutter unit 12 in that these units are stable front-to-back and are supported by the rear power wheels 16 and 17 and by the front caster wheels 61 and 62. The pivot mount 40 permits the cutter unit 12 to rotate with respect to power unit 11 which allows all of the wheels of the mower to engage the ground surface even though the ground surface might not be level. Further, this permits the cutter blades 38 to remain parallel to the ground surface on which the caster wheels are supported.

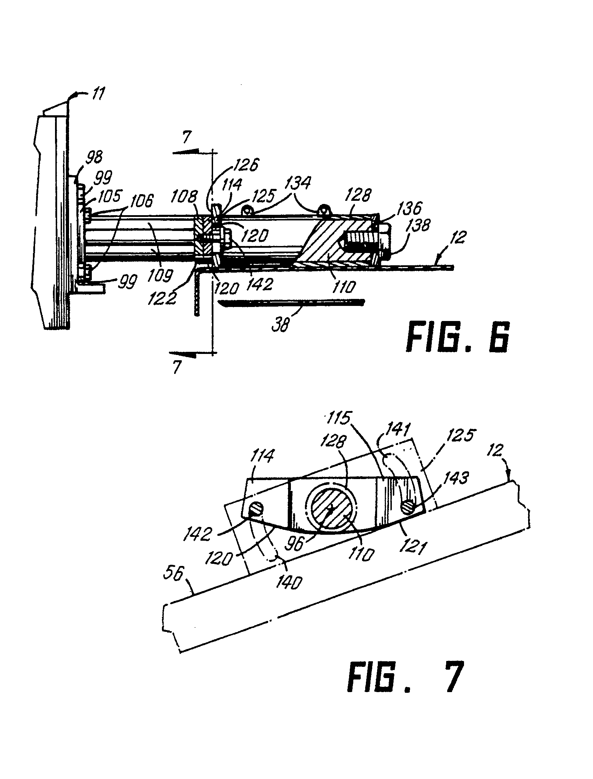

Cutter blades 38 are located within cutter housing 56, with each cutter blade being rotatable about an upwardly extending axis 70 and 71 (Figs. 1 and 4). Sheeves 72 and 73 are mounted on the top surface of cutter housing 56, and a belt drive system 75 drives the sheeves 72 and 73. The belt drive system includes a sheeve 76 rotated by cutter blade motor 36, power belt 77 driven by sheeve 76, transfer sheeve 78 which drives sheeves 79 and 80 (Fig. 2). Sheeves 79 drives transfer belt 81 of cutter blade sheeve 72, while transfer belt 82 drives cutter blade sheeve 73 from sheeve 80. Idler sheeves 84 and 85 are spring urged into engagement with transfer belts 81 and 82 and tend to maintain the belts in a tight relationship with respect to their sheeves.

While the drawings illustrate transfer sheave 78, the motor 36 can include a single sheave or double sheeves for directly driving blade sheeves 72, 73 and 80, with one or with separate drive belts, thereby eliminating the need for connecting belts 77, 82 and 82, and their associated sheeves.

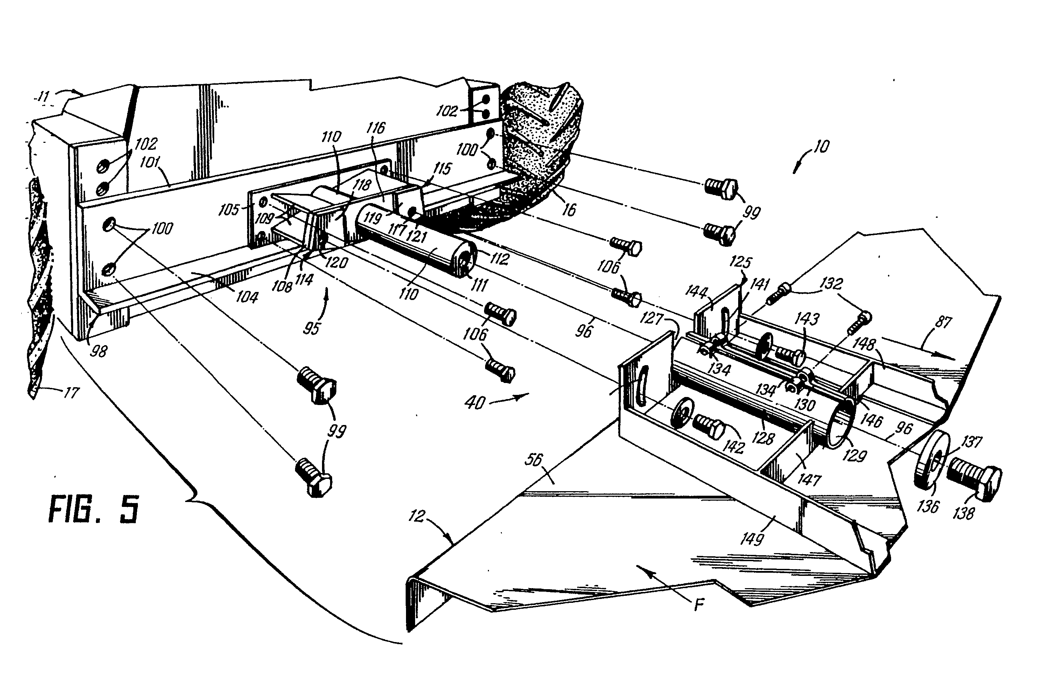

As illustrated in Fig. 3, pumps 24, 25 and 26 project forwardly of power unit 11 over cutter unit 12, with the pumps being arranged in an aligned, tandem relationship with respect to engine 15. As previously described, cutter unit 11 is pivotable about longitudinal axis 41.

As illustrated in Fig. 4, the arc of movement 88 of the cutter unit extends on opposite sides of the longitudinal axis 41, from positions approximately 25' above horizontal through an arc beneath and about the longitudinal axis 41 to a position approximately 25' above horizontal on the other side of the axis. This arc of movement leaves an envelope 90 above the radius lines 89 over the cutter unit 12 which is never occupied by the cutter unit 12 and which is available for placement of pumps 24, 25 and 26. Thus, even though cutter unit 12 pivots between inclined positions about the longitudinal axis 41, the unoccupied envelope 90 above the arc of movement 88 of the cutter unit receives the forward portions of the tandem pumps 24, 25 and 26. Thus, the pumps project forwardly of the power unit 11 and the weight of the pumps tends to relocate the center of gravity of the power unit further forwardly of the power unit. The use of the flexible conduits 34 and 35 between cutter blade pump 26 mounted on the power unit 11 and cutter motor 36 mounted on the cutter unit 12 allows a fluid connection to be maintained between the pump and its motor, even though there will be relative movement of the pump 26 and motor 36.

While the embodiment of the mower disclosed herein is of a power unit 11 and cutter unit 12 that are pivotably mounted together, it will be understood that the same or similar arrangement of pumps 24, 25 and 26 can be utilized with those slope mowers in which the cutter unit is not pivotably mounted to the power unit. Further, while a series of three pumps has been specifically disclosed, it will be understood that fewer or more pumps can be mounted in a similar arrangement, as may be desirable for performing the functions of the mower. For example, two pumps may be utilized, one pump for powering the two wheel motors, and a second pump can be utilized to drive a hydraulic motor that transmits rotary force to the pulley system 75 of the cutter unit. Further, a single pump can be utilized to drive a transaxle that powers both driving wheels, with the variation in velocity and change of direction of the wheels being performed by the transaxle instead of by separate pumps. Moreover, separate cutter blade pumps can be used to drive separate cutter blade motors, with each motor mounted separately to a cutter blade.

The pumps also can be arranged in a different sequence. For example, the drawings illustrate the pumps 24 and 25 which drive the wheel motors as being positioned closer to the engine than the pump 26 which drives the cutter motor 36, but the pump 26 can be positioned adjacent the engine, if desired.

As illustrated in Fig. 5, the impact resistant pivotal connection 40 of mower 10 is mounted between power unit 11 and cutter unit 12 and functions to rigidly support the units together about a longitudinal pivot axis 96, which permits the cutter unit 12 to pivot with respect to the power unit 11, but which supports the units from each other.

Support bar assembly 98 is mounted to the framework of power unit 11 by means of removable bolts 99 that extend through the openings 100 of the upright flange 101 of the support bar assembly 98 and into an opening of the several vertically spaced openings 102 of the framework of the power unit 11. The several openings 102 permit the support bar to be raised or lowered on the power unit, thereby raising or lowering the rear portion of the cutter unit with respect to the power unit. The lower platform 104 of support bar assembly 98 helps to form a support for the base plate 105. Base plate 105 is attached to support bar assembly 98 by its bolts 106 that extend through openings in the base plate 105 and through aligned openings of the upright flange 101 of the support bar assembly 98. Pivot bar 110 has one of its ends in abutment with base plate 105, with the pivot bar 110 extending forwardly from the power unit along pivot axis 96. Limit plate 108 is oriented parallel to base plate 105 and support gussets 109 are rigidly mounted between base plate 105, limit plate 108 and pivot bar 110 so that these elements remain in rigid relationship with respect to each other.

Pivot bar 110 includes a centrally positioned threaded bore 111 at its distal end surface 112. Bumpers 114 and 115 straddle or are mounted in an array on opposite sides of pivot bar 110 to the forward facing surface 116 of limit plate 108 and project forwardly from limit plate 108 to allow relief from the weld fillet around pivot bar 110. The bumpers 114 and 115 are fabricated of steel and are rigidly mounted to limit plate 108 by means of welding or other conventional connection means. Threaded bores 117 are formed through the forward facing surfaces 118 and 119 of the bumpers. The forward facing surfaces 118 and 119 are flat and are oriented perpendicular to the pivot axis 96. The lower edge surfaces 120 and 121 of bumpers 114 and 115 are sloped upwardly and outwardly, and the end portions of the lower edges of limit plate 118, such as the lower edge portion 122 of Fig. 6, are similarly shaped, in that they extend upwardly and outwardly and are coextensive with the lower edges of the bumpers 114 and 115.

Bumper plate 125 is rigidly mounted to decking of mower housing 56 of cutter unit 12 and is oriented parallel to limit plate 108. The rearwardly facing surface 126 of bumper plate 125 is flat and is to be oriented parallel to and in juxtaposition with the forward facing surfaces 118 and 119 of bumpers 114 and 115. Pivot tube 128 defines a cylindrical bearing surface 129 that extends therethrough, and a slot 130 extends from end to end of the pivot tube. Pivot tube 124 extends perpendicular to bumper plate 125 and is aligned with an opening 127 through the bumper plate. The cylindrical bearing surface 129 of pivot tube 128 is sized and shaped so as to correspond to the external convex surface of pivot bar 110, so that when the cutter unit 12 is to be mounted to the power unit 11, pivot bar 110 extends through bumper plate 125 and pivot tube 128. Adjusting screws 132 fit through threaded bosses 134 mounted on opposite sides of slot 130 of pivot tube 128, so that rotation of adjusting screws 132 results in the cylindrical bearing surface 129 becoming larger or smaller so as to fit properly about pivot bar 110.

Keeper plate 136 defines central opening 137 therethrough, and connecting bolt 138 extends through the opening 137 of plate 136, and into the threaded bore 111 of pivot bar 110. Keeper plate 136 engages the forward surface of pivot tube 128 and when the threaded shank of the connecting bolt is received in the bore 111, rotation of the bolt draws the pivot bar 110 into pivot tube 128, causing the flat forward facing surfaces 118 and 119 of bumpers 114 and 115 to be drawn against the rearwardly facing surface 126 of bumper plate 125. When mounted in this arrangement, cutter unit 12 is rigidly mounted to power unit 11 but is pivotable about pivot axis 96 with respect to power unit 11.

As illustrated in Figs. 5, 6 and 7, arcuate slots 140 and 141 are formed through bumper plate 125, with the radius of the slots extending from the longitudinal axis of cylindrical bearing surface 129, which is the same as pivot axis 96. Bolts 142 and 143 extend from the forward face 144 of bumper plate 125 through slots 140 and 141 and are threaded into threaded bores 117 of bumpers 114 and 115. In addition to bolt 138, bolts 142 and 143 function as secondary safety keepers, with bolt 138 and keeper 136 performing the primary function of maintaining bumper plate 125 in juxtaposition with respect to the forward facing surfaces 118 and 119 of bumpers 114 and 115, which holds the cutter unit 12 and power unit 11 together. Preferably, slots 140 and 141 that extend through bumper plate 125 each extend through an arc of 40', 20' on either side of level orientation of cutter unit 12 with power unit 11.

As illustrated in Fig. 7, when cutter unit 12 is pivoted, the keeper bolts 142 and 143 move close to the ends of their respective arcuate slots 140 and 141. Normally, the pivoting movement of the cutter unit 12 with respect to the power unit 11 is stopped by the sloped bottom surfaces 120 and 121 of bumpers 114 and 115 engaging the top surface of decking 56. This avoids shear forces being applied to bolts 142 and 143. Although Fig. 7 illustrates the cutter unit 12 having been pivoted counter clockwise, it will be understood that the cutter unit can be tilted to the same degree in a clockwise direction.

As illustrated in Fig. 5, bumper plate 125 and pivot tube 128 receive additional support from support struts 146 and 147 attached to pivot tube 128 and from additional struts 148 and 149 attached to elements 146 and 147 and to bumper plate 125. All of the elements 125, 146, 147, 148 and 149 are rigidly mounted to the decking 56 of cutter unit 12. With this arrangement, bumper plate 125 and pivot tube 128 are maintained in rigid relationship on the upper surface of decking 56.

It will be understood from the structure illustrated in Fig. 5 that when the cutter unit 12 is driven in a forward direction by power unit 11 as indicated by arrow 87 and the cutter unit inadvertently engages an obstruction such as a tree stump, and if the point of engagement of the tree stump with respect to the cutter unit 12 is offset from pivot axis 96, a bending force, such as force F, is applied to cutter unit 12. Force F, being displaced to one side of pivot axis 96, applies a bending stress to the impact resistant pivotal connection 95 between power unit 11 and cutter unit 12. The force is resisted by the rear surface 126 of bumper plate 125 engaging the forward facing surface 118 of bumper 114, as well as by bearing surface 129 of pivot tube 128 engaging the external surface of pivot bar 110. The engagement by bumper plate 125 with bumper 114 tends to absorb a major portion of the force F that is transmitted between cutter unit 12 and power unit 11, which avoids having this force absorbed by and possibly damaging pivot bar 110 and pivot tube 128.

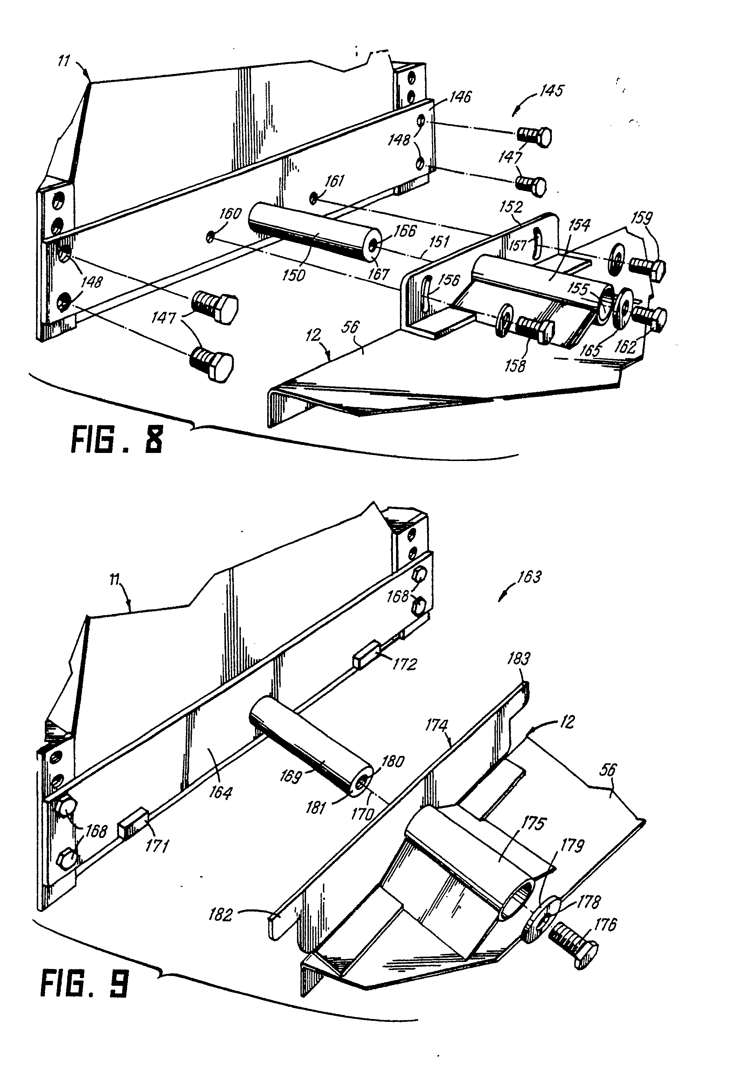

Fig. 8 illustrates an alternate embodiment 145 of the impact resistant pivotal connection which is suitable for relatively light weight mowers. Base plate 146 is mounted to the framework of power unit 11 by connectors such as bolts 147 extending through the openings 148 of the base plate, and pivot bar 150 is attached at one end to and extends forwardly from base plate 146 along the pivot axis 151 of the mower. Bumper plate 152 is rigidly mounted to the decking 56 of cutter unit 12, and pivot tube 154 has its rear end surface in abutment with the forward facing surface of bumper plate 152. An opening (not shown) through bumper plate 152 is in alignment with the annular bearing surface 155 of pivot tube 154. Arcuate slots 156 and 157 are formed through bumper plate 152, with the center of the arcs of the slots 156 and 157 located at the pivot axis 151. Keeper bolts 158 and 159 extend through arcuate slots 156 and 157 and are threaded into the internally threaded openings 160 and 161 of base plate 146.

The keeper bolts 158 and 159 maintain the rearwardly facing flat surface of bumper plate 152 in parallel sliding juxtaposition with respect to the forward facing flat face of base plate 146. In addition, bolt 162 extends through the opening of keeper plate 165 and is threaded into the internally threaded bore 166 formed through the distal surface 167 of pivot bar 150, which draws the pivot bar 150 into pivot tube 154 and holds together the facing bearing surfaces of base plate 146 and bumper plate 152. The slots 156 and 157 permit cutter unit 12 to pivot with respect to power unit 11 until the keeper bolts 158 and 159 reach the ends of the arcuate slots, whereupon further pivoting is terminated.

Fig. 9 illustrates a third embodiment 163 of the impact resistant pivotal connection that can be mounted between power unit 11 and cutter unit 12. In this embodiment the base plate 164 is mounted by bolts 168 to the framework of power unit 11, and pivot bar 169 extends forwardly from the forwardly facing flat surface of base plate 164, along the pivot axis 170. Stop protrusions 171 and 172 are located at the lower corners of base plate 164.

Bumper plate 174 is rigidly mounted to the decking 56 of cutter unit 12, and its rearwardly facing flat surface is to be mounted parallel to and in juxtaposition with respect to the forward facing flat surface of base plate 164. Pivot tube 175 has its rearward end mounted in abutment with bumper plate 174 and in registration with an opening (not shown) which extends through the bumper plate, so as to receive pivot bar 169 therethrough. Bolt 176 extends through the opening 178 of keeper plate 179 and into the internally threaded bore 180 formed through the distal surface 181 of pivot bar 169. This draws the pivot bar 169 and the pivot tube together in telescoped relationship, and urges the facing surfaces of base plate 164 and bumper plate 174 together. Laterally extending protrusions 182 and 183 of bumper plate 174 overhang stop protrusions 171 and 172 of base plate 164. When cutter unit 12 is pivoted about pivot axis 170 with respect to power unit 11, one of the overhanging protrusions 182 or 183 will engage one of the stop protrusions 171 or 172 so as to limit the amount of tilt.

As with the embodiment illustrated in Figs. 5-7, the embodiments illustrated in Figs. 8 and 9 tend to resist the bending forces applied to the pivot bars 150 and 169 by virtue of the fact that the rear flat surfaces of the bumper plates 152 and 174 engage the forward facing flat surfaces of base plates 146 and 164. Although the bending stresses are primarily absorbed by the facing surfaces of the base plates and the bumper plates, the base plates and bumper plates are maintained in pivotal relationship about pivot bars 150 and 169. When the cutter unit is in an unleveled or pivoted attitude with respect to the power unit and the cutter unit is driven into an obstruction, the base plates and bumper plates will still be in abutting overlapped relationship so as to absorb the bending forces applied to the pivotal connection.

While this invention has been described in connection with a power unit that has only driving wheels and no steerable wheels and relies upon the connection with the cutter unit for partial support, it will be understood by those skilled in the art that a similar impact resistant connection can be formed between a cutter unit and a power unit in which the power unit includes both driving wheels and steerable wheels. Moreover, the pivotal connectors have been illustrated with the pivot bars mounted to the power units and the pivot tubes mounted to the cutter units; however, these elements can be mounted in reverse positions, if desired, and other pivot connection structures can be used in combination with the impact resistant features disclosed herein.

While the invention has been described as a slope mower, the invention also relates to mowers that operate primarily on flat surfaces and/or which have cutter decks that are not pivotably connected to the chassis.

## Claims

1. A slope mower (10) including a power unit (11) and a cutter unit (12) positioned in front of said power unit when the mower is moving in a forward direction, said power unit including a chassis (14) with driving wheels (16, 17) positioned at each side of said chassis, a fluid driven wheel motor means (19) in driving relationship with respect to each of the wheels of said chassis, an engine (15) and pump (24, 25, 26) assembly mounted to said chassis, said pump means connected in fluid driving relationship with said wheel motor means, and a driver's seat (21) mounted to said chassis behind said engine and pump assembly, said cutter unit including a cutter blade housing with wheels (61, 62) positioned at each side of said housing, at least one cutter blade (38) rotatably supported by said housing and means (36, 75) driven by said engine for rotating said cutter blade, characterized by said engine and pump assembly including pump means (24, 25, 26) arranged in tandem with respect to said engine (15) and driven by said engine, said engine and pump assembly supported by and extending forwardly from said chassis and extending at least partly over said cutter unit.

2. The mower of claim 1 and further characterized by said pump means (24, 25, 26) comprising at least two pumps arranged in tandem.

3. The mower of claim 2 and further characterized by said tandem pumps comprising three pumps, and said means driven by said engine for rotating said blade comprising a fluid operated cutter blade motor in driving relationship with said blade and driven by one of said tandem pumps.

4. The mower of claim 1 and further characterized by pivot mounting means (40) attached to said power unit (11) and said cutter unit (12) for pivotably supporting said power unit and said cutter unit about a pivot axis (96) extending longitudinally of said mower, and wherein said engine and pump assembly is arranged parallel to said pivot axis and extends partly over said pivot mounting means.

5. The mower of claim 1 and further characterized by pivot mounting means (40) attached between said power unit (11) and said cutter unit (12) which enable said cutter unit to pivot with respect to said power unit through a predetermined arc (88), and wherein the portions of said engine and pump assembly extending forwardly from said chassis over said cutter unit are positioned above and outside the arc of movement of said cutter unit.

6. The mower of claim 1 and further characterized by said pump means in driving relationship with said wheel motors comprising two parallel piston pumps with tilt plate control of the displacement of the pistons.

7. The mower of claim 1 and further characterized by said engine and pump assembly comprising at least two pumps arranged in series and positioned centrally along the length of said mower.

8. The mower of claim 7 and further characterized by said means driven by said engine for rotating said cutter blade comprising a cutter blade pump (26) also mounted on said chassis (14) in aligned relationship with said series pumps and a fluid driven cutter blade motor (36) in driving relationship with said cutter blade (38) and driven by said cutter blade pump.

9. The mower of claim 1 and further characterized by said at least one cutter blade (38) comprising two cutter blades arranged side-by-side and each cutter blade rotatable about an upwardly extending axis (70, 71), and said means driven by said engine for rotating said cutter blade comprising a cutter blade pump (26) mounted on said chassis in aligned relationship with said pump means, a fluid driven cutter blade motor (36) mounted on said housing and driven by said cutter blade pump, and belt drive means (75) driven by said cutter blade motor in driving relationship with said cutter blades.

10. The mower of claim 1 and further characterized by pump means arranged in tandem comprising a tandem assembly of at least two pumps (24, 25) mounted in front of said engine (15) and positioned above said pivot axis (96).

11. The mower of claim 10 and further characterized by the tandem assembly of at least two pumps comprising one pump (24, 25) in fluid driving relationship with each wheel motor and a third pump (26) in fluid driving relationship with the cutter blade motor (36).

12. The mower of claim 1 and further characterized by pivot mounting means (40) positioned at a level above said cutter housing and said cutter housing being pivotable in an arc (88) of movement extending beneath and about said pivot mounting, and said engine and pump assembly extending above and out of the arc of movement of said cutter housing.

13. The mower of claim 11 and further characterized by the pumps (24, 25) in driving relationship with each wheel motor comprising variable displacement, reversible flow pumps for rotating the driving wheels at variable speeds and in opposite directions of rotation.

14. The mower of claim 4 and further characterized by said pivot mounting means (40) comprising a pair of impact resistant means mounted between said power unit and said cutter unit, said pair of impact resistant means straddling said pivot axis (96) and each comprising a bearing surface (119, 120) mounted on said power unit and a bearing surface (126) mounted on said cutter unit, said bearing surfaces of each impact resistant means extending in an arc about said pivot axis so that said bearing surfaces are movable with respect to each other about said pivot axis, means (99, 100, 136, 138) for maintaining said bearing surfaces of each impact resistant means in abutment and movable with respect to each other while in overlapped relationship when said power unit and said cutter unit tilt with respect to each other about said pivot axis to either side of leveled orientation, whereby during forward movement of the mower should the cutter unit engage to one side of its pivot axis an obstacle in its path the bearing surfaces of the impact resistant means tend to engage each other to resist any turning across the pivot axis of the cutter unit with respect to the power unit.

**Revendications**

1. Tondeuse de talus (10) comportant une unité de puissance (11) et une unité de coupe (12) disposée au devant de ladite unité de puissance lorsque la tondeuse se déplace vers l'avant, ladite unité de puissance comprenant un châssis (14) doté de roues motrices (16, 17) disposées de chaque côté dudit châssis, un élément moteur à roues à commande hydraulique (19) en relation d'entraînement en rapport avec chacune des roues dudit châssis, un ensemble moteur (15) et pompe (24, 25, 26) monté sur ledit châssis, ledit moyen de pompage étant relié hydrauliquement avec ledit élément moteur à roues, et un siège pour le conducteur (21) monté sur ledit châssis derrière ledit ensemble moteur et pompe, ladite unité de coupe comprenant un bâti de lame de coupe avec des roues (61, 62) disposées de chaque côté dudit bâti, au moins une lame de coupe (38) soutenue en rotation par lesdits bâti et éléments (36, 75) commandés par ledit moteur pour faire pivoter ladite lame de coupe, caractérisée par ledit ensemble moteur et pompe dont le moyen de pompage (24, 25, 26) disposé en tandem relativement au dit moteur (15) et commandé par ledit moteur, ledit ensemble moteur et pompe étant soutenu et s'étendant dudit châssis pour dépasser au moins partiellement de ladite unité de coupe.

2. Tondeuse de la revendication 1, caractérisée en outre par ledit moyen de pompage (24, 25, 26) comprenant au moins deux pompes disposées en tandem.

3. Tondeuse de la revendication 2, caractérisée en outre par lesdites pompes en tandem comprenant trois pompes, et ledit moyen commandé par ledit moteur pour entraîner en rotation ladite lame comprenant un moteur à lame de coupe à transmission hydraulique en relation de commande avec ladite lame et actionné par l'une desdites pompes en tandem.

4. Tondeuse de la revendication 1, caractérisée en outre par un moyen d'articulation pivotant (40) fixé à ladite unité de puissance (11) et ladite unité de coupe (12) pour soutenir, par pivotement, ladite unité de puissance et ladite unité de coupe autour d'un axe pivotant (96) s'étendant longitudinalement par rapport à ladite tondeuse, et dans laquelle ledit ensemble moteur et pompe est monté parallèlement au dit axe pivotant et dépasse partiellement ledit moyen d'articulation pivotant.

5. Tondeuse de la revendication 1, caractérisée en outre par un moyen d'articulation pivotant (40) fixé entre ladite unité de puissance (11) et ladite unité de coupe (12) qui permet à ladite unité de coupe de pivoter en relation avec ladite unité de puissance sur un arc prédéterminé (88), et dans laquelle les parties dudit ensemble moteur et pompe s'étendant dudit châssis pour dépasser ladite unité de coupe sont placées au-dessus et hors de l'arc du mouvement de l'arc décrit de ladite unité de coupe.

6. Tondeuse de la revendication 1, caractérisée en outre par ledit moyen de pompage en relation de commande avec lesdits moteurs à roues comprenant deux pompes à piston parallèles, munies d'une commande de plateau d'inclinaison du déplacement des pistons.

7. Tondeuse de la revendication 1, caractérisée en outre par ledit ensemble moteur et piston comprenant au moins deux pompes installées en série et disposées centralement dans la longueur de ladite tondeuse.

8. Tondeuse de la revendication 7, caractérisée en outre par ledit moyen commandé par ledit moteur pour entraîner en rotation ladite lame de coupe comprenant une pompe de la lame de coupe (26) montée également sur ledit châssis (14) en relation d'alignement sur lesdites pompes en série et un moteur pour la lame de coupe entraîné hydrauliquement (36) en relation de commande avec ladite lame de coupe (38) et entraîné par ladite pompe de la lame de coupe.

9. Tondeuse de la revendication 1, caractérisée en outre par au moins une lame de coupe précitée (38) comprenant deux lames de coupe disposées côté à côte et chacune étant apte à pivoter autour d'un axe ascendant (70,71), et ledit moyen commandé par ledit moteur pour entraîner en rotation ladite lame de coupe comprenant une pompe pour la lame de coupe (26) montée sur ledit châssis en relation d'alignement sur ledit moyen de pompage, un moteur entraînant la lame de coupe commandé hydrauliquement (36) monté sur ledit bâti et commandé par ladite pompe de lame de coupe, et un moyen de commande à courroie (75) entraîné par ledit moteur de la lame de coupe en relation d'entraînement avec lesdites lames de coupe.

10. Tondeuse de la revendication 1, caractérisée en outre par un moyen de pompage disposé en tandem comprenant un ensemble en tandem d'au moins deux pompes (24, 25) monté à l'avant dudit moteur (15) et placé au-dessus dudit axe pivotant (96).

11. Tondeuse de la revendication 10, caractérisée en outre par l'ensemble en tandem d'au moins deux pompes comprenant une pompe (24, 25) en relation de transmission hydraulique avec chaque moteur de roues et une troisième pompe (26) en relation de transmission hydraulique avec le moteur de lame de coupe (36)

12. Tondeuse de la revendication 1, caractérisée en outre par un moyen d'articulation pivotant (40) placé au-dessus du niveau dudit boîtier de l'unité de coupe et ledit boîtier de l'unité de coupe étant apte à pivoter dans un arc de cercle (88) en dessous et autour de ladite articulation pivotante, et ledit ensemble moteur et pompe s'étendant au-dessus et hors de l'arc de mouvement décrit par ledit boîtier de l'unité de coupe.

13. Tondeuse de la revendication 11, caractérisée en outre par les pompes (24, 25) en relation d'entraînement avec chaque moteur des roues comprenant un déplacement variable des pompes à circulation réversible pour entraîner en rotation les roues motrices à des vitesses variables et dans des directions de rotation opposées.

14. Tondeuse de la revendication 4, caractérisée en outre par ledit moyen d'articulation pivotant (40) comprenant une paire de moyens résistant aux chocs, montée entre ladite unité de puissance et ladite unité de coupe, ladite paire de moyens résistant aux chocs évitant l'axe pivotant (96) et chacun comprenant une surface d'appui (119, 120) montée sur ladite unité de puissance et une surface portante (126) montée sur ladite surface de coupe, lesdites surfaces portantes de chaque moyen résistant aux chocs s'étendant dans un arc autour de l'axe pivotant de façon que lesdites surfaces portantes soient mobiles l'une par rapport à l'autre autour dudit axe pivotant, un moyen (99, 100, 136, 138) pour maintenir lesdites surfaces portantes de chaque moyen résistant aux chocs, en butée et mobiles l'une par rapport à l'autre, en restant en relation de chevauchement lorsque ladite unité de puissance et ladite unité de coupe s'inclinent en rapport l'une avec l'autre autour dudit axe pivotant, vers les deux côtés de l'orientation nivelée, où pendant la progression de la tondeuse, lorsque l'unité de coupe entraîne, sur un côté de son axe pivotant, un obstacle se trouvant sur son chemin, les surfaces portantes du moyen résistant aux chocs tendent alors à s'engager réciproquement pour résister à tout choc avec l'axe pivotant de l'unité de coupe en relation avec l'unité de puissance.

**Patentansprüche**

1. Böschungsmäher (10) mit einer Antriebseinheit (11) und einem Schneidwerk (12), das bei Vorwärtsfahrt des Mähers vor der Antriebseinheit angeordnet ist, wobei die Antriebseinheit ein Fahrgestell (14) mit Antriebsrädern (16, 17) auf beiden Seiten des Fahrgestells, einen Hydromotor (19), der getrieblich mit den beiden Rädern des Fahrgestells verbunden ist, einer Antriebs- (15) und Pumpenanordnung (24, 25, 26) auf dem Fahrgestell, die mit dem Hydromotor verbunden ist, und einen Fahrersitz (21) auf dem Fahrgestell hinter der Antriebs- und Pumpenanordnung aufweist und das Schneidwerk ein Gehäuse mit beidseitig des Gehäuses angeordneten Rädern (61, 62), mindestens eine drehbar auf dem Gehäuse gelagerte Schneidklinge (38) und Antriebsmittel (36, 75) für die Schneidklinge besitzt, dadurch gekennzeichnet, daß die Antriebs- und Pumpenanordnung einschließlich der Pumpen (24, 25, 26) relativ zum Antrieb (15) und über diesen angetrieben in Tandemanordnung vorgesehen sind, und daß die Antriebs- und Pumpenanordnung von dem Fahrgestell getragen ist, nach vorn von dem Fahrgestell ausläd und sich mindestens teilweise bis über das Schneidwerk erstreckt.

2. Böschungsmäher nach Anspruch 1, dadurch gekennzeichnet, daß die Pumpenanordnung (24, 25, 26) mindestens zwei in Tandemanordnung vorgesehene Pumpen aufweist.

3. Böschungsmäher nach Anspruch 2, dadurch gekennzeichnet, daß die Pumpenanordnung drei Pumpen aufweist, und daß die Antriebsmittel für den Rotationsantrieb der Schneidklinge einen Hydromotor aufweist, der mit der Schneidklinge hinsichtlich seines Antriebs verbunden und durch eine der Pumpen angetrieben ist.

4. Böschungsmäher nach Anspruch 1, dadurch gekennzeichnet, daß zwischen der Antriebseinheit (11) und dem Schneidwerk (12) ein Schwenklager (40) zur schwenkbaren Verbindung der Antriebseinheit und des Schneidwerks um eine sich in Längsrichtung des Mähers erstreckende Schwenkachse (96) vorgesehen ist, und daß die Antriebs- und Pumpenanordnung parallel zu der Schwenkachse angeordnet ist und sich teilweise oberhalb des Schwenklagers erstreckt.

5. Böschungsmäher nach Anspruch 1, dadurch gekennzeichnet, daS zwischen der Antriebseinheit (11) und dem Schneidwerk (12) ein Schwenklager (40) vorgesehen ist, um das Schneidwerk relativ zur Antriebseinheit (11) auf einem bestimmten Bogen (88) zu verschwenken, und daß die Teile der Antriebs- und Pumpenanordnung, die sich vom Fahrgestell nach vorn über das Schneidwerk erstrecken, opberhalb und außerhalb des Bewegungsbogens des Schneidwerks angeordnet sind.

6. Böschungsmäher nach Anspruch 1, dadurch gekennzeichnet, aß die mit dem Hydromotoren verbundenen Pumpen zwei parallele Axialkolbenpumpen mit Taumelscheibensteuerung für den Kolbenhub aufweisen.

7. Böschungsmäher nach Anspruch 1, dadurch gekennzeichnet, daß die Antriebs- und Pumpenanordnung mindestens zwei in Reihe angeordnete Pumpen aufweist, die zentral über die Länge des MÄhers vorgesehen sind.

8. Böschungsmäher nach Anspruch 7, dadurch gekennzeichnet, daß die Antriebsmittel für die Schneidklinge eine Schneidklingenpumpe (26), die auch auf dem Fahrgestell (14) fluchtend zu den in Reihe angeordneten Pumpen angeordnet sind, und einen hydraulisch angetriebenen Schneidklingenmotor (36), der getrieblich mit der Schneidklinge (38) verbunden ist und von der Schneidklingenpumpe angetrieben ist, aufweisen.

9. Böschungsmäher nach Anspruch 1, dadurch gekennzeichnet, daß mindestens eine der Schneidklingen (38) zwei nebeneinander angeordnete Einzelklingen aufweist, wobei jede Einzelklinge um eine Vertikalachse (70, 71) rotierend angetrieben ist, und daß die Antriebsmittel für den Rotationsantrieb eine Schneidklingenpumpe (26), die auf dem Fahrgestell fluchtend zu der Pumpenanordnung vorgesehen ist, einen hydraulisch angetriebenen Schneidklingenmotor (36) auf dem Gehäuse und über die Schneidklingenpumpe angetrieben, und einen Riementrieb (75), der von dem Schneidklingenmotor in getrieblicher Verbindung zu den Einzelklingen angetrieben ist, aufweist.

10. Böschungsmäher nach Anspruch 1, dadurch gekennzeichnet, daß die in Tandemanordnung vorgesehene Pumpenanordnung eine Tandemeinheit aus mindestens zwei Pumpen (24, 25) aufweist, die vorn auf der Antriebsanordnung (15) und über der Schwenkachse (96) vorgesehen ist.

11. Böschungsmäher nach Anspruch 10, dadurch gekennzeichnet, daß die Tandemeinheit aus mindestens zwei Pumpen eine Pumpe (24, 25), die über eine Hydraulikleitung antriebsmäßig mit jedem dem Rad zugeordneten Hydromoter verbunden ist, und eine dritte Pumpe (26), die über eine Hydraulikleitung antriebsmäßig mit dem Schneidklingenmotor (36) verbunden ist, aufweist.

12. Böschungsmäher nach Anspruch 1, dadurch gekennzeichnet, daß ein Schwenklager (40) oberhalb des Gehäuses des Schneidwerks vorgesehen ist, daß das Gehäuse auf einem Bewegungsbogen (88) unterhalb und um das Schwenklager schwenkbar gelagert ist, und daß die Antriebs-und Pumpenanordnung sich oberhalb und außerhalb des Bewegungsbogens des Gehäuses erstreckt.

13. Böschungsmäher nach Anspruch 11, dadurch gekennzeichnet, daß die antriebsmäßig mit jedem dem Rad zugeordneten Hydromotor verbundenen Pumpen (24, 25) zum Antrieb der Räder mit variablen Geschwindigkeiten und in entgegengesetzten Drehrichtungen Pumpen mit variablem Hub und Umkehr der Fließrichtung der Hydraulikflüssigkeit aufweisen.

14. Böschungsmäher nach Anspruch 4, dadurch gekennzeichnet, daß das Schwenklager (40) ein Paar schlagbiegefester Mittel aufweist, die zwischen der Antriebseinheit und dem Schneidwerk angeordnet sind, die Schwenkachse (96) umgeben und jeweils über eine Lagerfläche (119, 120) auf der Antriebseinheit und eine Lagerfläche (126) auf dem Schneidwerk aufweisen, daß sich die Lagerflächen der schlagbiegefesten Mittel in einem Bogen um die Schwenkachse erstrecken, so daß die Lagerflächen zueinander um die Schwenkachse beweglich sind, daß Teile (99, 100, 136, 138) zum Halten der Lagerflächen der schlagbiegefesten Mittel in Anlage und zueinander beweglich in überlappender Relativlage, wenn die Antriebseinheit und das Schneidwerk relativ zueinander um die Schwenkachse nach einer der beiden Seiten in angehobener Orientierung schwenken, vorgesehen sind, wobei während der Vorwärtsbewegung des Mähers, wenn das Schneidwerk auf einer Seite der Schwenkachse in seinem Weg auf ein Hindernis auftreffen sollte, die Lagerflächen der schlagbiegefesten Mittel sich aneinander anlegen, um jede weitere Schwenkung um die Schwenkachse zwischen Schneidwerk und Antriebseinheit zu verhindern.

FIG. 1

FIG. 2

FIG. 3

FIG. 4

FIG. 5

FIG. 6

FIG. 7

FIG. 8

FIG. 9